# EUROPEAN PATENT APPLICATION

(11) **EP 1 251 710 A1**
(43) Date of publication of application: **23.10.2002**
(21) Application number: 02252084.5
(22) Date of filing: 22.03.2002
(51) Int. Cl.: H04Q 7/38

(54) **Method and apparatus for migrating subscribers between networks**

(30) Priority: 18.04.2001 US 836988
(71) Applicant: LUCENT TECHNOLOGIES INC., Murray Hill, New Jersey 07974-0636 (US)
(72) Inventor: Olmstead, Scott Douglas, Geneva, Illinois 60134 (US); Tang, Ben Champion, Naperville, Illinois 60540 (US); Tretyak, Gregory, Buffalo Grove, Illinois 60089 (US); Yost, David George, Lisle, Illinois 60532 (US)
(74) Representative: Buckley, Christopher Simon Thirsk

(57) **Abstract**

Subscribers (103) are migrated from a first network (101) to a second network (115). Once the second network (115) is ready for traffic, connections from other networks (113) to the first network (101) are effectively transferred to the gateway mobile switching center (GMSC) (123) of the second network (115). All calls for the first network (101) and the second network (115) are directed to the GMSC (123) of the second network, which queries the home location register (HLR) (125) of the second network (115) for routing information. When a subscriber (117) is provisioned and activated at this HLR (125), the call is routed within the second network (115). When a subscriber (103) is not provisioned or activated at this HLR (125), the call is routed to the first network (101).

## Description

### Field of the Invention

This invention relates to communication systems, including but not limited to migration of subscribers between wireless communication systems.

### Background of the Invention

Various types of cellular communication systems are known to provide radio telephone service to a large number of mobile subscribers using a relatively small number of frequencies. Such service is provided by dividing a service area into a number of cells and reusing the frequencies in non-adjacent cells. This cellular principle has permitted a large growth in the amount of wireless telecommunications that may be carried over the allocated radio spectrum, thus providing significant expansion in the number of wireless communication subscribers. Different cellular technologies or protocols include analog, time division multiple access (TDMA), code division multiple access (CDMA), Global System for Mobile Communications (GSM), and Universal Mobile Telecommunications System (UMTS).

As communication systems evolve and provide different services, mobile network providers, also known as service providers or network operators, desire to change technologies, for example, to abandon less efficient technologies or to obtain more services, resources, efficiency, and/or voice quality provided by more advanced technologies. Issues regarding the migration of subscribers from a network based on one technology to a network based on another technology need to be resolved. For example, the network provider may prefer to maintain the same phone numbers for its subscribers and to have the migration appear seamless to its subscribers.

Accordingly, there is a need for a method and apparatus to migrate subscribers between networks based on different technologies.

### Summary

A method of migrating subscribers from a first network to a second network comprises the steps of transferring at least one connection from at least one other network to a gateway mobile switching center of the second network and directing a call from the at least one other network to a subscriber at the first network to the gateway mobile switching center of the second network.

### Brief Description of the Drawings

FIG. 1 is a block diagram of a first network and a second network in accordance with the invention.
FIG. 2 is a block diagram showing the first network interconnected with the second network in accordance with the invention.
FIG. 3 is a flowchart showing a method of migrating subscribers from a first network to a second network in accordance with the invention.
FIG. 4 is a timing diagram showing the migration of subscribers from a first network to a second network in accordance with the invention.

### Description of a Preferred Embodiment

The following describes an apparatus for and method of migrating subscribers from a first network to a second network without requiring the subscribers to obtain new phone numbers. Once the second network is ready for traffic, connections from other networks to the first network are effectively transferred to the gateway mobile switching center (GMSC) of the second network. All calls for the first network and the second network are directed to the GMSC of the second network, which queries the home location register (HLR) of the second network for terminating subscriber routing information. When a subscriber is provisioned and activated at this HLR, the call is routed within the second network. When a subscriber is not provisioned or activated at this HLR, the call is routed to the first network.

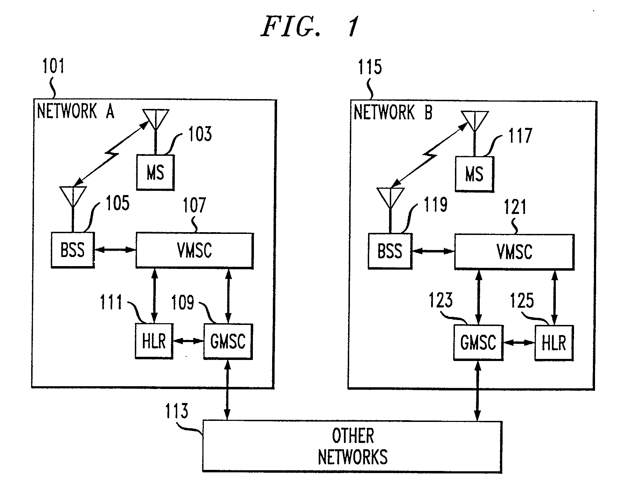

A block diagram of a first network and a second network is shown in FIG. 1. A network provider operates Network A ("first network") 101 and has a plurality of mobile stations or mobile subscribers 103 (only one is shown for the sake of simplicity). The MS 103 communicates via wireless communication resources to one or more base station systems 105 (only one is shown for the sake of simplicity). Inbound and outbound communications from/to the subscribers 103 are controlled via the network's 101 infrastructure, including devices such as a visited mobile switching center 107, an HLR 111, and a GMSC 109, as known in the art. The GMSC 109 receives calls from other networks 113, including wireline networks, such as the Public Switched Telephone Network (PSTN), and wireless networks, such as a Public Land Mobile Network (PLMN), analog, time division multiple access (TDMA), code division multiple access (CDMA), Global System for Mobile Communications (GSM), and Universal Mobile Telecommunications System (UMTS), among others. The GMSC 109 routes calls from the other networks and from within the network 101 to the subscribers 103 in the network 101. Other infrastructure devices may also be present, but are not shown for the sake of simplicity of the drawing.

In order to facilitate subscriber migration from Network A 101 to Network B ("second network") 115 for the network provider's subscribers 103, Network B 115 is built according to the network provider's specifications, including appropriate infrastructure devices, e.g., one or more BSSs 119, one or more VMSCs 121, a GMSC 123, and an HLR 125, prior to registration or transfer of any of the service provider's subscribers 103 to Network B 115. Network B 115 is also connected to any other networks 113, such as those described above, with which communication is desired. All subscriber data from Network A 101 may be pre-populated in the HLR 125 of Network B 115, although the subscribers may not yet be activated. As the network provider is ready to migrate a subscriber from Network A 101 to Network B 115, the network provider activates the HLR for that subscriber in Network B 115. Subscribers may be activated one or more at a time. Network B 115 may be tested using one or more mobile subscribers 117 prior to bringing the new network 115 on line for present subscribers 103. Prior to bringing Network B fully on-line, trunks from Network A 101 to the other networks 113 must be moved to the GMSC 123 of Network B 115.

Network A 101 and Network B 115 may be any wireless networks, such as analog, TDMA, CDMA, CDMA 2000, UMTS, and GSM. For example, the network provider may desire to migrate its subscribers from a TDMA system to a GSM system.

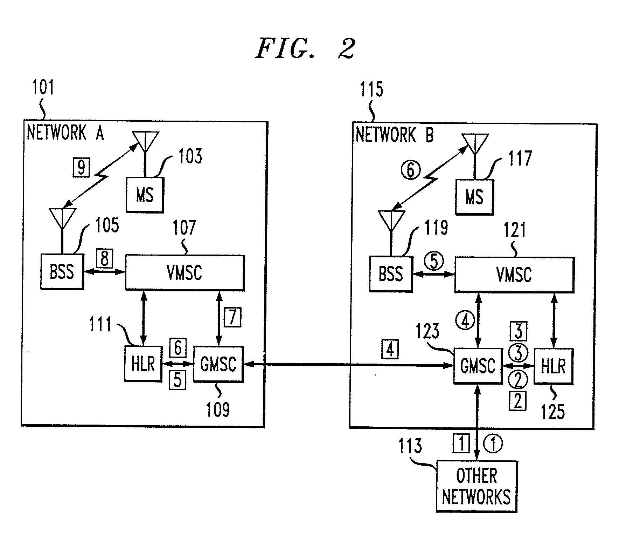

A block diagram showing the first network interconnected with the second network is shown in FIG. 2. Network A 101 is disconnected from the other networks 113, and all calls directed to Network A 101 by routing them to the GMCS 123 based on the called or dialed number. Connections between Network A 101 and Network B are established to enable calls to be forwarded between the networks, and particularly for incoming calls for Network A 101 to be forwarded from the GMSC 123 to Network A 101. All calls directed to Network B 115 are also directed to the GMSC 123 of Network B 115. The GMSC 123 is an interface point to the other networks 113 and typically queries the HLR 125 and routes calls to an appropriate (V)MSC or GMSC. Interconnections between Network A 101 and Network B 115 are also established to enable calls to be sent on from the GMSC 123 to Network A 101. For example, trunks are established from the other networks 113 to the GMSC 123 of Network B 115. The routing tables in the other networks 113 are updated to route calls directed to Network A 101 and calls directed to Network B 115 to use the trunks to the GMSC 123 of Network B 115. The trunks from the other networks 113 to the GMSC 109 are then removed. Each subscriber's directory number(s), features, and services are provisioned in the HLR 125 of Network B 115, thereby providing the capability for the subscriber's current (Network A 101) directory number to continue to be used by the subscriber when the subscriber migrates to Network B 115. Each subscriber's number(s) as well as dialing plan or service features are activated by the service provider at the HLR 125 of Network B 115, typically as the network provider is ready to provide service to those subscribers.

The GMSC 123 of Network B needs to route calls for subscribers 103 in Network A 101 and subscribers 117 in Network B 115 to the appropriate network. To accomplish this task, the GMSC 123 queries the HLR 125 of Network B 115 for routing information for all calls, whether they are for Network A 101 or Network B 115. When the subscriber is provisioned and activated at the HLR 125, the call is routed to Network B 115. When the subscriber is not provisioned or not active at the HLR 125, the call is routed to Network A 101.

Examples of call flows for both networks are shown in FIG. 2. A call flow for a call directed to a subscriber 117 that is registered at Network B's HLR 125 is indicated by the numbers 1 through 6 in circles. Calls for subscribers activated at Network B 115 take place as they would normally take place in a system of the technology of Network B 115. The call comes in (1) to the GMSC 123 from one of the other networks 113. The GMSC 123 queries (2) the HLR 125 of Network B 115, which returns (3) routing information for the subscriber 117 to the GMSC 123. The GMSC 123 routes (4) the call to the appropriate VMSC 121, which routes (5) the call to the appropriate base station 119, which directs (6) the call in a wireless fashion to the MS 117. Optionally, the HLR 125 may send a message directed to Network A's HLR 111 that indicates that the subscriber is registered and active on Network B 115. In response to this message, Network A's HLR 111 may delete or deregister the HLR's record for the subscriber.

A call flow for a call directed to a subscriber 103 that is registered at Network A's HLR 111, but not Network B's HLR 125, is indicated by the numbers 1 through 9 in squares. The call comes in [1] to the GMSC 123 from one of the other networks 113. The GMSC 123 queries [2] the HLR 125 of Network B 115, which returns [3], to the GMSC 123, a message indicating that the subscriber 103 is not active or provisioned in the HLR 125. The GMSC 123 then routes [4] the call to Network A 101. The call may, for example, be routed to the GMSC 109 of Network A. At this point, the call proceeds as a call normally proceeds in Network A. The GMSC 109 queries [5] the HLR 111 of Network A 101, which returns [6] routing information for the subscriber 103 to the GMSC 109. The GMSC 109 routes [7] the call to the appropriate VMSC 107, which routes [8] the call to the appropriate base station 105, which directs [9] the call in a wireless fashion to the MS 103.

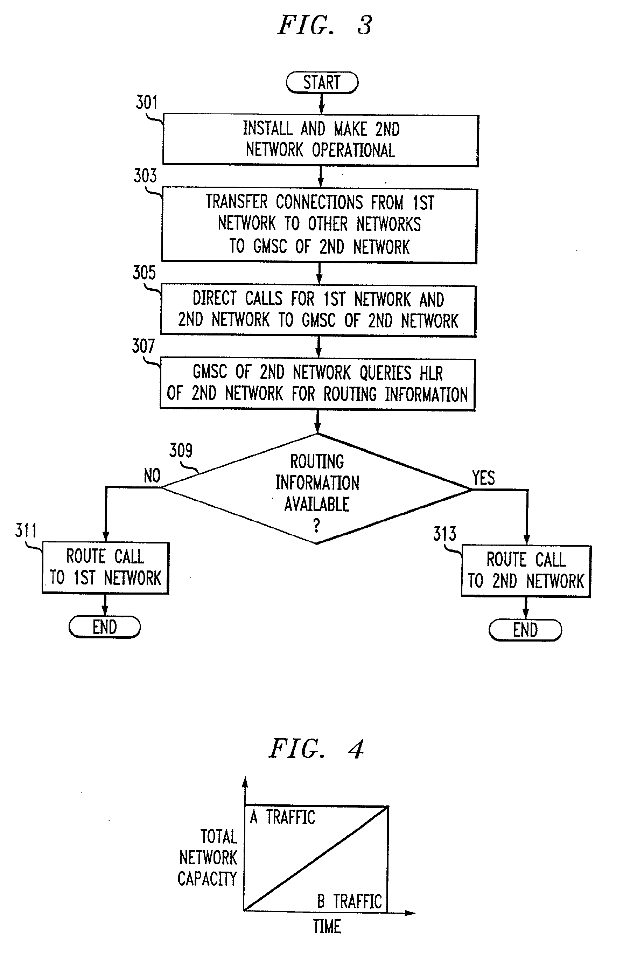

A flowchart illustrating a method of migrating subscribers from a first network to a second network is shown in FIG. 3. At step 301, Network B 115 is installed and made operational, e.g., the GMSC 123 and the HLR 125 of Network B 115. At step 303, connections, such as trunks, between Network A 101 (the first network) and the other networks 113 are transferred from Network A 101 to the GMSC 123 of Network B 115 (the second network). At step 305, calls from the other networks 113 for Network A and Network B are directed to the GMSC 123 of Network B 115. At step 307, upon receipt of a call, the GMSC 123 queries the HLR 125 for routing information to the call. When routing information for the call is not available at step 309, the process continues with step 311, where the call is routed to Network A 101. The HLR 111 of Network A 101 is queried for routing information for the call. The call is then routed according to the routing information. In the event that routing information is not available for the call at Network A 101, the call is rejected. When routing information for the call is available at step 309, the process continues with step 313, where the call is routed to Network B 115.

Outbound calls (calls from a Network B subscriber 117 to one of the other networks 113) for Network B subscribers 117 are handled normally for subscribers activated at Network B 115. Outbound calls for Network A subscribers 103 are forwarded to Network B, where they are routed to other networks 113 by tandem switching.

A timing diagram illustrating the migration of subscribers from a first network to a second network is shown in FIG. 4. The timing diagram shows the total combined network capacity for both networks as time passes. A linear decrease/increase in capacity is shown for network A/B for the sake of simplicity, although a continual, but not linear, decrease/increase is likely to occur. Prior to Network B being placed on-line, all subscribers 103 for the network provider are registered at Network A 101 and all traffic is at Network A. As subscribers 103 migrate to Network B, which process is controlled by the network provider, less Network A 101 traffic exists and more subscribers 117 are registered/located at Network B 115 and traffic at Network B increases. Eventually, all subscribers 117 are registered/located at Network B 115, all traffic is at Network B 115, and no traffic is present in Network A 101. At the time when no traffic is present at Network A 101, Network A may be decommissioned and taken off line. Although subscribers may be removed from Network A 101 as they are registered at Network B 115, it is advantageous to leave subscribers registered at the HLR 111 for a number of reasons. For example, in the event that Network B 115 suffers any failure or maintenance outage, Network A may be utilized to service subscribers that have dual-mode subscriber devices, i.e., subscribers that operate on both Network A 101 and Network B 115. Alternatively, the network provider may opt to leave Network A 101 active, at least for a time, for example, because subscribers wish to utilize Network A 101 for various reasons or because the network provider intends to sell the system.

The GMSC 123 of Network B needs to have the capacity to handle calls for both Network A and Network B, plus any new subscribers that may subscribe to the network during the migration period. Although a separate HLR is shown for the two networks, a single dual-mode HLR (one that handles the technologies for both Network A and Network B) may be utilized. In the case where the HLR 125 of Network B is a dual-mode HLR that serves both Network A and Network B, the GMSC 123 query of a dual-mode HLR 125 may yield routing for a call to a particular network, i.e., Network A 101 or Network B, rather than provision and activation information for the called party at Network B 115. In addition, each GMSC 109 or 123 may be co-located with a VMSC 107 or 121 in the GMSC's associated network.

The present invention gives a network provider the ability to migrate from one network to another network, regardless of the technology of either network, without requiring its subscribers to change phone numbers. Subscribers are also able to continue utilizing ancillary items associated with the phone number, such as business cards, stationary, and advertising media. Unless the subscriber needs to change phones to accommodate the second network's technology, e.g., when the subscriber does not have a dual-mode phone, the user will not experience a noticeable loss in service, provided the service provide registers the subscriber at the second network.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method of migrating subscribers from a first network to a second network, the method comprising the steps of:
transferring at least one connection from at least one other network to a gateway mobile switching center of the second network;
directing a call from the at least one other network to a subscriber at the first network to the gateway mobile switching center of the second network.

2. The method of claim 1, further comprising the step of querying, by the gateway mobile switching center of the second network, a home location register of the second network, for routing information for the call.

3. The method of claim 1, wherein the first network is a time division multiple access network and the second network is a global system for mobile communications network.

4. The method of claim 1, further comprising the step of registering subscribers from the first network at a home location register of the second network.

5. The method of claim 4, further comprising the step of decommissioning the first network when all the subscribers from the first network are registered at the home location register of the second network.

6. An apparatus comprising:
a receiver arranged and constructed to receive a call directed to one of a first network and a second network;
a query device arranged and constructed to query a home location register of the second network to obtain routing information for the call.

7. The apparatus of claim 6, further comprising a router arranged and constructed to route the call to the first network when routing information for the call is not available at the home location register of the second network.

8. The apparatus of claim 6, further comprising a router arranged and constructed to route the call to a gateway mobile switching center of the first network when routing information for the call is not available at the home location register of the second network.

9. The apparatus of claim 6, further comprising a router arranged and constructed to route the call to the second network when routing information for the call is available at the home location register of the second network.

10. The apparatus of claim 6, further comprising a router arranged and constructed to route the call to one of the first network and the second network depending on the routing information for the call.
